# EUROPÄISCHE PATENTSCHRIFT

(11) **EP 0 591 778 B1**
(45) Veröffentlichungstag und Bekanntmachung des Hinweises auf die Patenterteilung: **08.01.1997**
(21) Anmeldenummer: 93115393.6
(22) Anmeldetag: 24.09.1993
(51) Int. Cl.: B23B 23/00, B23B 23/04

(54) **Reitstock für eine Drehmaschine**
Tailstock for a lathe
Poupée mobile pour un tour

(30) Priorität: 09.10.1992 DE 4234049
(43) Veröffentlichungstag der Anmeldung: 13.04.1994
(73) Patentinhaber: Maschinenfabrik Ravensburg AG, D-88212 Ravensburg (DE)
(72) Erfinder: Kronstorfer, Werner, D-71720 Oberstenfeld (DE)
(74) Vertreter: Patentanwälte Eisele, Otten & Roth

(56) Entgegenhaltungen:
- AT-B- 242 470

## Beschreibung

Die Erfindung betrifft einen Reitstock für eine Drehmaschine nach dem Oberbegriff des Anspruchs 1.

### Stand der Technik:

Ein Reitstock ist eine auf dem Drehmaschinen-Bett verschiebbar und festzuklemmende Zentrier- und Spannvorrichtung für das Werkstück. Er dient z. B. als Gegenlager beim Drehen eines Werkstücks. Bei Bohrarbeiten auf der Drehmaschine wird er als Spannvorrichtung für das Bohrwerkzeug verwendet. Der Bohrervorschub erfolgt dabei durch ein axiales verschieben einer Reitstockpinole, was manuell oder maschinell erfolgen kann. Üblicherweise wird die Reitstockpinole mit Hilfe einer handradbetätigten Gewindespindel angetrieben. Die Pinole bei bekannten Reitstöcken ist grundsätzlich nur axial verschiebbar, wobei durch Nut und Gleitstück eine Verdrehung verhindert wird. Nach erfolgter Verschiebung der Pinole mittels der Antriebsspindel wird diese z. B. mittels eines Handhebels geklemmt.

Zur Durchführung der Drehbewegung des Werkstücks muß die in die Pinole eingesetzte Körnerspitze oder Reitstockspitze drehbar ausgeführt werden, da die, die Körnerspitze aufnehmende Pinole selbst keine Drehbewegung durchführt. Im einfachsten Fall ist deshalb die Körnerspitze gegenüber ihrem Einspannschaft drehbar gelagert ausgeführt.

Bei großen Werkzeugmaschinen wird die Körnerspitze oder sonstige Werkzeuge zur Halterung oder Bearbeitung des Werkstücks in komplizierte Zwischenaufnahmevorrichtungen eingesetzt, die die Drehlagerfunktion zwischen Pinole und z.B. Körnerspitze übernehmen. Da derartige Maschinen mit sehr hohen axialen Kräften arbeiten, die beispielsweise 80 t betragen können, ist eine aufwendige Lagerung in radialer oder axialer Richtung dieser Zwischengehäuse zur Durchführung der Drehbewegung erforderlich. Aufgrund der damit vorhandenen Spiele und Toleranzen in den Lagerungen ergeben sich eine Reihe von Nachteilen.

Aus der AT-B-242 470 ist ein Reitstock mit einer Pinole nach der Gattung des Anspruchs 1 bekanntgeworden. Bei diesem Reitstock ist die in aller Regel nicht drehbare, jedoch längs verfahrbare Pinole mit der in aller Regel rotierbare Innenspindel eines herkömmlichen Reitstocks zu einem Bauteil vereinigt, d. h., diese Entgegenhaltung weist eine sowohl drehbare als auch axial längs verschiebbare Pinole auf. Nachteilig an dieser bekannten Vorrichtung ist die Anordnung einer zusätzlichen Innenspindel als separates Bauteil innerhalb der Pinole, woraus sich wiederum unerwünschte Ungenauigkeiten aufgrund von Spiel- und Toleranzverlusten ergeben.

Der Erfindung liegt die Aufgabe zugrunde, die Nachteile beim Stand der Technik zu vermeiden und insbesondere einen Reitstock zu schaffen, der einen besonders einfachen Aufbau aufweist und auch bei großer Belastung mit geringsten Spiel- und Toleranzverlusten auskommt.

Diese Aufgabe wird durch die Merkmale des Anspruchs 1 gelöst.

In den Unteransprüchen sind vorteilhafte und zweckmäßige Weiterbildungen und Verbesserungen angegeben.

### Vorteile der Erfindung:

Die Erfindung hat gegenüber den bekannten Reitstock-Konstruktionen erhebliche Vorteile. Aufgrund einer stark vereinfachten Konstruktion läßt sich ein komplizierter Aufbau hinsichtlich radialer und axialer Lagerung vermeiden.

Gemäß der Erfindung läßt sich eine problemlose Längsverschiebung der Pinole zur unmittelbaren Anstellung an das Werkstück ohne Zwischenschaltung einer weiteren Innenspindel erreichen, wobei das zylindrische Bauteil der Pinole in einem hydrostatischen Radiallager axial verschoben werden kann. Die axiale Verschiebung und Festlegung der Pinole geschieht dabei durch eine rückwärtige Gewindespindel. Die Reitstockspitze ist ohne Spielverluste unmittelbar in der Pinole gelagert.

Besonders vorteilhaft ist die Ausbildung des axialen Abstützlagers als hydrostatische Axiallager, dessen hydrostatischer Druck ein Maß für die Axialkraft auf den Reitstock darstellt. Dabei kann der Druck des hydrostatischen Axiallagers als Steuerung für ein weiteres Kurzhub-Axiallager dienen, welches als Längenausgleich der durch Erwärmung sich ausdehnenden Werkstücke dient.

Vorteilhaft ist weiterhin die Verwendung eines Hydromotors geringer Leistung, um eine grobe Voreinstellung der axial verschiebbaren Pinole gegenüber dem Werkstück mittels der Gewindespindel durchzuführen. Eine Feineinstellung erfolgt dann über den Hydraulikdruck in einem Hydraulik-Kurzhubzylinder.

Weitere Einzelheiten von Ausführungsformen der Erfindung ergeben sich aus der Zeichnung und sind in der nachfolgenden Beschreibung unter Angabe weiterer Vorteile näher erläutert.

Es zeigen
- Fig. 1: einen Längsschnitt durch einen Reitstock und
- Fig. 2: eine Stirnansicht nach Fig. 1.

### Beschreibung der Erfindung:

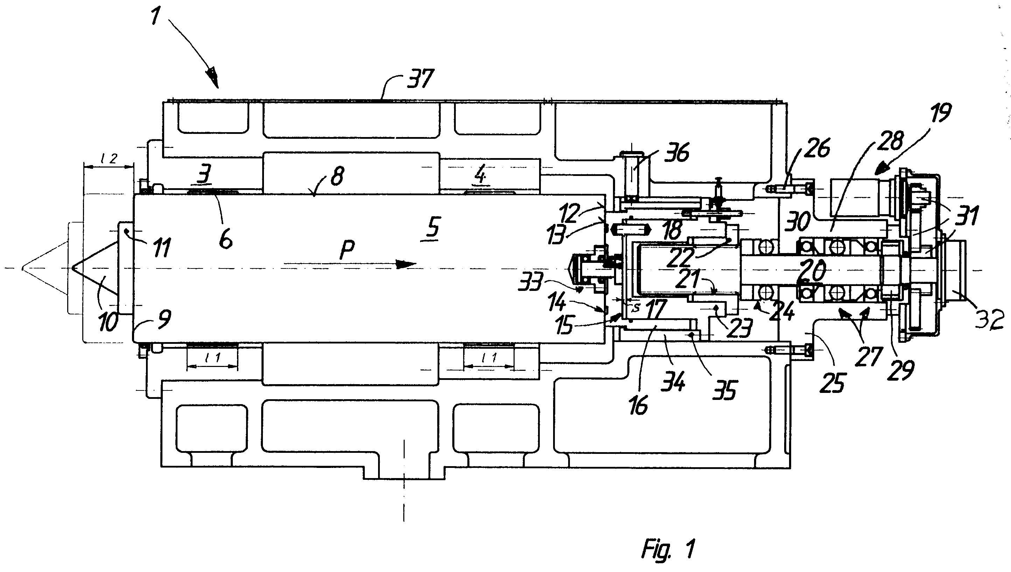

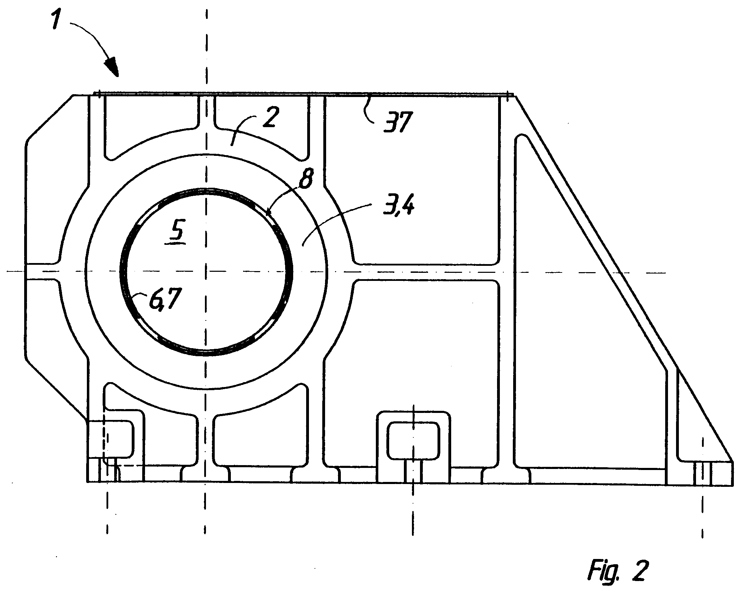

Der Reitstock 1 besteht aus einem stabilen Gußgehäuse 2, wie dies in Fig. 1 in Seitenansicht und in Fig. 2 in Stirnansicht gezeigt ist. In dem zylindrischen Gußgehäuse 2 befinden sich zwei Lagerringe 3, 4 für die hydrostatische Radiallagerung der drehbar und längsverschiebbar ausgebildeten Pinole 5. Die Lagerringe 3, 4 weisen hierfür hydraulische Lagertaschen 6, 7 auf, die sich über eine Länge l₁ erstrecken. Die Pinole 5 ist als drehzylindrisches Bauteil mit einer glatten zylindrischen Mantelfläche 8 ausgebildet. Demnach ist die Pinole 5 in den Lagerringen 3, 4 nicht nur radial, sondern auch axial verschieblich gelagert. Das Maß der Axialverschiebung ist in der Fig. 1 beispielsweise mit l₂ angegeben.

Die drehbare und längsverschiebbare Pinole 5 trägt an ihrer vorderen Stirnseite 9 eine Reitstockspitze oder Körnerspitze 10, die beispielsweise mit einer Schraubverbindung 11 an die Pinole 5 befestigt ist.

Am hinteren Ende 12 der Pinole 5 befindet sich eine hydrostatisches Axiallager 13 mit der hydrostatischen Lagertasche 14. Der Hydraulikdruck in diesem Lager 13 baut sich in Abhängigkeit von der Axialbelastung P auf, die auf die Pinole 5 wirkt. Dieser Lagerdruck stellt ein genaues Maß für die Axialkraft P dar und ist nicht durch Reibungs- oder Klemmkräfte verfälscht.

Hinter dem Hydrostatik-Axiallager 13 befindet sich ein Hydraulik-Kurzhubzylinderraum 15, der aus einem äußeren, topfförmigen Zylindergehäuse 16 und einem inneren, ebenfalls topfförmigen Kolben 17 gebildet ist, die den Kurzhubzylinderraum 15 mit einem Hub s ≈ ± 5mm bilden. Das topfförmige Zylindergehäuse 16 bildet demnach in seiner der Pinole 5 zugewandten Seite das hydrostatische Axiallager 13 und in seiner der Pinole 5 abgewandten Seite den Hydraulik-Kurzhubzylinderraum 15, mittels welchem eine Längenänderung des Werkstücks bei Temperaturänderungen oder dergleichen ausgeglichen wird. Dabei wird der Hydraulikdruck im Kurzhubzylinderraum 15 durch den hydrostatischen Lagerdruck im Hydrostatik-Axiallager 13 gesteuert. Je mehr sich das eingespannte Werkzeug erwärmt und ausdehnt, um so größer wird der Druck im hydrostatischen Axiallager 13, dessen Lagerspalt grundsätzlich etwa gleichbleibend ist. Ein Druckausgleich für diese axialen Spannungen geschieht im Kurzhubzylinderraum 15, d.h. der Hub im Zylinderraum 15 wird entsprechend reduziert. Als Wegverschiebung hierfür ist ein Weg s ≈ ± 5 mm vorgesehen. Dabei überwachen zwei nicht näher dargestellte Sicherheitsendschalter die richtige Lage des Kurzhubzylinders 15, damit bei Arbeitsbeginn der volle Hub von +/- 5 mm für den Längenausgleich zur Verfügung steht.

Eine Verdrehsicherung zwischen dem äußeren Zylindergehäuse 16 und dem inneren Kolben 17 übernimmt ein Verdrehsicherungsbolzen 18.

Die gesamte Hubbewegung der Pinole 5, die im Ausführungsbeispiel beispielsweise l₂ 200 mm betragen kann, wird mittels eines Hydromotors 19 über eine Trapezgewindespindel 20 durchgeführt, die über das Trapezgewinde 21 auf eine Gewindemutter 22 einwirkt. Die Gewindemutter 22 ist über eine Schraubverbindung 23 mit dem topfförmigen, inneren Kolben 17 des Kurzhubzylinders 15 verbunden. Durch Drehung der Gewindespindel 20 erfolgt demnach eine axiale Verschiebung der Gewindemutter 22 und damit eine Verschiebung des Kolbens 17. Die Axialverschiebung wird über den Kurzhubzylinder 15 auf das äußere topfförmige Zylindergehäuse 16 und über das hydrostatische Axiallager 13 auf die Pinole 5 übertragen.

Die Lagerung des äußeren, topfförmigen Zylindergehäuses 16 innerhalb des Reitstockgehäuses 2 kann über eine zusätzliche Lagerbuchse 34 erfolgen, die über eine Schraubverbindung 35 und einen Verdrehsicherungsbolzen 36 im Reitstockgehäuse 2 gehalten ist.

Die Gewindespindel 20 stützt sich über ein Axial-Wälzlager 24 gegenüber dem hinteren Lagerschild 25 des Reitstockgehäuses 2 ab. Das Lagerschild 25 ist über eine Schraubverbindung 26 mit dem Reitstockgehäuse 2 verbunden.

Die radiale Lagerung der Gewindespindel 20 erfolgt über eine Mehrfachanordnung von Radial-Wälzlagern 27, die in dem topfförmigen Gehäuse 28 des Lagerschilds 25 angeordnet sind. Eine hintere Abschlußmutter 29 fixiert die Wälzlager im topfförmigen Gehäuse 24. Ein abschließender Lagerdeckel 30 verschließt die rückwärtige Anordnung dieser Lagerung.

Der Hydromotor 19 ist an das topfförmige Gehäuse 28 des hinteren Lagerschilds angeflanscht und über ein Untersetzungsgetriebe 31 mit der Spindel 20 verbunden. Dabei erfolgt die Steuerung des Hydromotors 19 ausschließlich manuell und nicht von der Maschinensteuerung, um sicherzustellen, daß auch bei einer größeren Störung der Steuerung eine Rückwärtsbewegung der Reitstockpinole sicher verhindert wird, um ein Herausfallen des Werkstückes zu vermeiden.

Zur Sicherheit ist am Ende des Hydromotors weiterhin eine Federdruckbremse 32 eingebaut, die die Gewindespindel 20 sicher festhält. Als weitere Sicherheit wird außerdem bei Stillstand der Spindel 20 der Hydromotor hydraulisch blockiert.

Der Hydromotor 19 erzeugt über die Trapezgewindespindel 20 nur eine Axialkraft von ca. 20 % der erforderlichen Nennkraft. Mit dieser relativ geringen Axialkraft bewegt sich die Reitstockpinole 5 auf das Werkstück zu. Beim Auftreffen auf das Werkstück wird der Hydromotor 19 aufgrund seiner geringen Leistung "abgewürgt". Die volle Nennkraft auf das Werkstück wird erst durch den Druckaufbau im Kurzhubzylinder 15 erreicht und konstant gehalten.

Auch die Rückwärtsbewegung der Reitstockpinole erfolgt durch den Hydromotor 19 über die Trapezgewindespindel 20, wobei ein kleines Axiallager 33 am hinteren Ende der Pinole 5 diese nach hinten zieht.

Das Reitstockgehäuse ist auf seiner Oberseite mit einem Gehäusedeckel 37 verschlossen.

Gegenüber konventionell gebauten Reitstöcken bietet demnach die vorliegende Erfindung eine Reihe von Vorteilen, die insbesondere in einer erheblich höheren Rundlaufgenauigkeit und in einer wesentlich erhöhten Steifigkeit liegen. Weiterhin ist die Lagerung verschleißfrei, wobei höchste Genauigkeit erzielt wird. Die Lagerung hat eine höhere Lebensdauer. Schließlich wird die Axialkraft exakt eingehalten und nicht durch Reibungsverluste verfälscht.

Diese Vorteile werden im wesentlichen durch die gemeinsame Lagerung für die Rotation und die axiale Bewegung der entsprechenden Reitstockteile und insbesondere der Pinole 5 erzielt. Hierdurch ist die Genauigkeit und auch die Steifigkeit insbesondere deshalb erhöht, weil der Durchmesser der Pinole und damit des axial zu bewegenden Teils so groß ist, wie bei herkömmlichen Lösungen die Pinole selbst, wobei insbesondere andere Drehteile, die die Steifigkeit verschlechtern, entfallen. Es sind demnach keine weiteren Wälzlager, Spannhülsen und sonstige Gleitführungen der Pinole mit einseitiger Klemmung vorhanden. Die Genauigkeit wird insbesondere deshalb sehr hoch, weil es keinerlei konzentrisch gelagerter Teile mehr gibt, deren Rundlauffehler sich zu einem Gesamtrundlauffehlern addieren. Der Rundlauf der Pinole wird einzig und allein von der sehr genauen hydrostatischen Lagerung in den Lagerringen 3, 4 bestimmt, deren Rundlauf dem eines Wälzlagers deutlich überlegen ist.

## Patentansprüche

1. Reitstock für eine Drehmaschine oder dgl., bestehend aus einem Reitstockgehäuse (2), in welchem eine, mittels einer Spindel (20) axialverschiebbare Pinole (20) gelagert ist, wobei die Pinole (5) als längsverschiebbares und drehbares Teil ausgebildet und wobei im Reitstockgehäuse (2) ein hydrostatisches Radiallager (3, 4) für die Pinole (5) vorgesehen ist, in welchem die Pinole axial verschiebbar gelagert ist, dadurch gekennzeichnet, daß die Pinole (5) unmittelbar und ohne zusätzliche Anordnung einer konzentrisch angeordneten Spindel bzw. ohne Zwischenschaltung weiterer Lagerstellen die axiale Werkstückabstützung vornimmt, daß eine Körnerspitze (10) fest im vorderen Ende der Pinole zur Abstützung des Werkstücks fixiert ist, wobei der Pinole (5) hydraulische Abstützmittel (13, 15) zugeordnet sind, die vom Werkstück verursachte Änderungen der Axialkraft kompensieren und damit die Axialkraft konstant halten.

2. Reitstock nach Anspruch 1, dadurch gekennzeichnet, daß das hydrostatische Radiallager (3, 4) aus wenigstens zwei im Reitstockgehäuse (2) angeordneten Lagerringen (3, 4) mit hydraulischen Lagertaschen (6, 7) besteht, in welchem die zylindrische Pinole (5) axial längsverschiebbar angeordnet und radial gelagert ist.

3. Reitstock nach Anspruch 1 oder 2, dadurch gekennzeichnet, daß am hinteren Ende (12) der drehbaren Pinole (5) ein hydrostatisches Axiallager (13) vorgesehen ist, wobei vorzugsweise der Hydraulikdruck des hydrostatischen Axiallagers (13) als Maß für die Axialkraft (P) erfaßbar und auswertbar ist.

4. Reitstock nach Anspruch 3, dadurch gekennzeichnet, daß hinter dem hydrostatischen Axiallager (13) ein Hydraulik-Kurzhubzylinder (15) für einen axialen Längenausgleich durch Längenänderung eines Werkstücks vorgesehen ist, wobei der Hydraulik-Kurzhubzylinder (15) vorzugsweise durch den Hydraulikdruck im hydrostatischen Axiallager (13) gesteuert wird.

5. Reitstock nach Anspruch 4, dadurch gekennzeichnet, daß der Hydraulik-Kurzhubzylinder (15) eine einstellbare Hubbwegung von s ≈ ± 5 mm ausführt.

6. Reitstock nach einem der vorhergehenden Ansprüche, dadurch gekennzeichnet, daß die axiale Hubbewegung der Pinole (5) mittels eines Hydromotors (19) erfolgt, der über eine Gewindespindel (20) auf die Pinole (5) einwirkt.

7. Reitstock nach Anspruch 6, dadurch gekennzeichnet, daß sich die mit einem Trapezgewinde ausgestattete Gewindespindel (20) über ein Axiallager (24) am endseitigen Lagerschild (25) des Reitstockgehäuses (2) abstützt.

8. Reitstock nach Anspruch 6 oder 7, dadurch gekennzeichnet, daß der Hydraulik-Kurzhubzylinder (15) durch ein äußeres, topfförmiges Zylindergehäuse (16) und ein in diesem sich axial verschiebenden, topfförmigen Kolben (17) gebildet ist, und daß die Gewindespindel (20) über eine Spindelmutter (22) mit dem Kolben (17) verbunden ist.

9. Reitstock nach einem der vorhergehenden Ansprüche 6 bis 8, dadurch gekennzeichnet, daß die Steuerung des Hydromotors (19) manuell erfolgt.

10. Reitstock nach einem der vorhergehenden Ansprüche, dadurch gekennzeichnet, daß der Aufbau und die Einhaltung der axialen Nennkraft P der Pinole (5) durch einen Druckaufbau im Hydraulik-Kurzhubzylinder (15) erfolgt.

11. Reitstock nach einem der vorhergehenden Ansprüche, dadurch gekennzeichnet, daß die Rückwärtsbewegung der Pinole (5) durch den Hydromotor (19) erfolgt, wobei am hinteren Ende (12) der Pinole (5) ein Axial-Rückhollager (33) vorgesehen ist.

12. Reitstock nach einem der vorhergehenden Ansprüche, dadurch gekennzeichnet, daß die Pinole (5) als drehzylindrisches Bauteil mit einer zylindrischen Mantelfläche (8) ausgebildet ist, welches gegenüber den Lagerringen (3, 4) hydrostatisch radial abgestützt ist und daß die Längsverschiebung der Pinole (5) im Radiallager (3, 4) in hydrostatischen Lagertaschen (6, 7) erfolgt.

## Claims

1. Tailstock for a lathe or the like, consisting of a tailstock slide (2), in which is mounted a sleeve (5), which is axially displaceable by means of a spindle (20), the sleeve (5) being constructed as a longitudinally displaceable and rotary part and provided in the tailstock slide (2) is a hydrostatic radial bearing (3, 4) for the sleeve (5), in which the sleeve (5) is mounted to be axially displaceable, characterised in that the sleeve (5) directly and without the additional provision of a concentrically located spindle or without the interposition of further bearings undertakes the axial work-piece support, that a centre (10) is fixed in the front end of the sleeve for supporting the work-piece, hydraulic support means (13, 15) being associated with the sleeve (5), which compensate for changes in the axial force caused by the work-piece and thus keep the axial force constant.

2. Tailstock according to Claim 1, characterised in that the hydrostatic radial bearing (3, 4) consists of at least two bearing rings (3, 4) located in the tailstock slide (2), with hydraulic bearing pockets (6, 7), in which the cylindrical sleeve (5) is longitudinally displaceable in the axial direction and is mounted radially.

3. Tailstock according to Claim 1 or 2, characterised in that provided at the rear end (12) of the rotary sleeve (5) is a hydrostatic axial bearing (13), the hydraulic pressure of the hydrostatic axial bearing (13) preferably being able to be ascertained and evaluated as a measurement of the axial force (P).

4. Tailstock according to Claim 3, characterised in that provided behind the hydrostatic axial bearing (13) is a hydraulic short stroke cylinder (15) for an axial compensation of length by a change of length of a work-piece, the hydraulic short stroke cylinder (15) preferably being controlled by the hydraulic pressure in the hydrostatic axial bearing (13).

5. Tailstock according to Claim 4, characterised in that the hydraulic short stroke cylinder (15) carries out an adjustable stroke movement of S ± 5 mm.

6. Tailstock according to one of the preceding Claims, characterised in that the axial stroke movement of the sleeve (5) takes place by means of a hydraulic motor (19), which acts by way of a threaded spindle (20) on the sleeve (5).

7. Tailstock according to Claim 6, characterised in that the threaded spindle (20) equipped with a trapezoidal thread is supported by way of an axial bearing (24) on the terminal bearing bracket (25) of the tailstock slide (2).

8. Tailstock according to Claim 6 or 7, characterised in that the hydraulic short stroke cylinder (15) is formed by an outer, cup-shaped cylinder housing (16) and a cup-shaped piston (17) sliding axially therein, and that the threaded spindle (20) is connected by way of a spindle nut (22) to the piston (17).

9. Tailstock according to one of the preceding Claims 6 to 8, characterised in that the control of the hydraulic motor (19) takes place manually.

10. Tailstock according to one of the preceding Claims, characterised in that the build-up and the maintenance of the axial nominal force P of the sleeve (5) takes place due to a build up of pressure in the hydraulic short stroke cylinder (15).

11. Tailstock according to one of the preceding Claims, characterised in that the reverse movement of the sleeve (5) takes place due to the hydraulic motor (19), an axial return bearing (33) being provided at the rear end (12) of the sleeve (5).

12. Tailstock according to one of the preceding Claims, characterised in that the sleeve (5) is constructed as a rotary cylindrical component with a cylindrical surface (8), which is supported hydrostatically radially with respect to the bearing rings (3, 4) and that the longitudinal displacement of the sleeve (5) in the radial bearing (3, 4) takes place in hydrostatic bearing pockets (6, 7).

## Revendications

1. Contre-poupée pour un tour ou analogue, constituée d'un boîtier de contre-poupée (2), dans lequel est montée une douille (5) de la contre-poupée axialement mobile au moyen d'un axe (20), la douille (5) étant réalisée comme pièce pouvant tourner et être déplacée longitudinalement, et un palier radial hydrostatique (3,4) pour la douille (5) étant prévu dans le boîtier (2) de la contre-poupée, palier dans lequel la douille est montée de façon axialement mobile, caractérisée en ce que la douille (5) reçoit directement, et sans agencement supplémentaire d'un axe agencé de façon concentrique ou sans interposition d'autres points d'appui, l'appui de pièce axial, en ce qu'une contre-pointe (10) est fixée rigidement dans l'extrémité avant de la douille pour l'appui de la pièce, la douille (5) étant associée à des moyens d'appui hydrauliques (13,15) qui compensent des modifications, provoquées par la pièce, de la force axiale et, ainsi, maintiennent constante la force axiale.

2. Contre-poupée selon la revendication 1,
caractérisée en ce que le palier radial hydrostatique (3,4) est constitué d'au moins deux bagues de palier (3,4) agencées dans le boîtier (2) de la contre-poupée avec des poches de palier hydrauliques (6,7), palier dans lequel la douille cylindrique (5) est agencée de façon axialement mobile longitudinalement et est montée radialement.

3. Contre-poupée selon la revendication 1 ou 2,
caractérisée en ce que, à l'extrémité arrière (12) de la douille rotative (5), il est prévu un palier axial hydrostatique (13), la pression hydraulique du palier axial hydrostatique (13) pouvant être avantageusement détectée et exploitée comme mesure pour la force axiale (P).

4. Contre-poupée selon la revendication 3,
caractérisée en ce que, derrière le palier axial hydrostatique (13), il est prévu un vérin hydraulique (15) à course courte pour une compensation longitudinale axiale lors d'une modification de longueur d'une pièce, le vérin hydraulique (15) à course courte étant commandé avantageusement par la pression hydraulique dans le palier axial hydrostatique (13).

5. Contre-poupée selon la revendication 4,
caractérisée en ce que le vérin hydraulique (15) à course courte effectue une course réglable de s ≈ ± 5 mm.

6. Contre-poupée selon une des revendications précédentes,
caractérisée en ce que la course axiale de la douille (5) est effectuée au moyen d'un moteur hydraulique (19), qui agit, par l'intermédiaire d'une broche filetée (20), sur la douille (5).

7. Contre-poupée selon la revendication 6,
caractérisée en ce que la broche filetée (20) munie d'un filetage trapézoïdal s'appuie, par l'intermédiaire d'un palier axial (24), contre le flasque d'extrémité (25) du boitier (2) de la contre-poupée.

8. Contre-poupée selon la revendication 6 ou 7,
caractérisée en ce que le vérin hydraulique (15) à course courte est formé par un cylindre externe (16), en forme de creuset, et un piston (17) en forme de creuset se déplaçant axialement dans celui-ci, et en ce que la broche filetée (20) est reliée, par l'intermédiaire d'un écrou (22), au piston (17).

9. Contre-poupée selon une des revendications précédentes 6 à 8,
caractérisée en ce que la commande du moteur hydraulique (19) est effectuée manuellement.

10. Contre-poupée selon une des revendications précédentes,
caractérisée en ce que la génération et le maintien de la force nominale axiale (P) de la douille (5) ont lieu par une génération de pression dans le vérin hydraulique (15) à course courte.

11. Contre-poupée selon une des revendications précédentes,
caractérisée en ce que le mouvement en arrière de la douille (5) est effectué par le moteur hydraulique (19), un palier de rappel axial (33) étant prévu à l'extrémité arrière (12) de la douille (5).

12. Contre-poupée selon une des revendications précédentes,
caractérisée en ce que la douille (5) est réalisée comme pièce cylindrique de révolution ayant une surface d'enveloppe cylindrique (8), laquelle pièce est appuyée de façon radiale hydrostatique par rapport aux bagues de palier (3,4), et en ce que le déplacement longitudinal de la douille (5) dans le palier radial (3,4) est effectué dans des poches de palier hydrostatiques (6,7).
